# EUROPEAN PATENT SPECIFICATION

(11) **EP 2 317 075 B1**
(45) Date of publication and mention of the grant of the patent: **02.01.2013**
(21) Application number: 10186347.0
(22) Date of filing: 04.10.2010
(51) Int. Cl.: F01D 5/00, B23K 26/34, B23P 6/00, B22F 5/04

(54) **Method for repairing a gas turbine component**
Verfahren zum Reparieren einer Gasturbinenkomponente
Procédé pour réparer un composant de turbine à gaz

(30) Priority: 30.10.2009 US 256399 P
(43) Date of publication of application: 04.05.2011
(73) Proprietor: Alstom Technology Ltd, 5400 Baden (CH)
(72) Inventor: Stankowski, Alexander, 5303 Würenlingen (CH); Hövel, Simone, 5408 Ennetbaden (CH); Rickenbacher, Lukas, 4053 Basel (CH); Hoebel, Matthias, 5210 Windisch (CH); Ambrosy, Günter, 5404 Baden (CH)

(56) References cited:
- EP-A1- 1 231 010
- EP-A2- 2 070 641
- WO-A1-2004/096487
- JP-A- 2007 278 995
- US-A1- 2003 082 048
- US-A1- 2003 105 538
- US-A1- 2004 083 024

## Description

### BACKGROUND OF THE INVENTION

The present invention relates to the technology of gas turbines. It refers to a method for repairing a gas turbine component according to the preamble of claim 1.

### PRIOR ART

Today, gas turbines have turbine inlet temperatures of more than 1400°C. Accordingly, the components of those gas turbines such as blades, vanes or liners are exposed to a high thermal load and mechanical stress. As those components are usually made of expensive high-temperature resistant materials, it is desirable to repair those components, when damaged, instead of replacing them. However, the repair of damaged gas turbine components is of limited quality, when the damaged section is removed and an insert is manufactured to fit into the removed region, as the insert has to be manufactured with high precision to avoid a loss in mechanical stability and change in the flow characteristics of the machine.

Document EP 1 620 225 B1 (WO 2004/096487 A1), which is considered being the closest prior art, discloses a method for repairing and/or modifying components of a gas turbine according to the preamble of claim 1. Initially, at least one particularly damaged section of the component, which is to be repaired is extracted from the component. A CAD model is then produced for the replacement part by building the difference between nominal parametric CAD model and measured geometry data set of the damaged component. The replacement part is subsequently produced with the aid of an additive manufacturing process. Finally, the produced replacement part is integrated into the component, which is to be repaired.

Document US 6,355,086 B2 discloses a method and apparatus for fabricating a component by a direct laser process. One example of such a component is a gas turbine engine blade having an abrasive tip formed directly thereon.

Document WO 2008/046386 A1 teaches a method for producing a gas turbine component with at least one closed outer wall and an inner structure bounded by the or each closed outer wall and defining hollow spaces, comprising the following steps: a) providing a three-dimensional CAD model of the gas turbine component to be produced; b) breaking down the three-dimensional CAD model into horizontal, substantially two-dimensional layers; c) building up layer by layer the gas turbine component to be produced with the aid of a additive manufacturing process using the layers generated from the CAD model in such a way that the or each outer wall is built up together with the inner structure and is accordingly connected to the inner structure with a material bond.

The document EP 1 231 010 A1 discloses a method of repairing gas turbine engine components. The method includes removing the damaged portion and fabricating an insert to match the removed portion. The insert is precision machined and crystallographically matched to the original component, and then bonded to this component using transient liquid phase bonding techniques and suitable heat treatment. Although the document contains a wealth of information on the bonding process, no details of the precision machining of the insert are given.

Document US 5,269,057 teaches a method for replacing airfoil components includes the steps of identifying a portion of the airfoil to be replaced, removing the portion by a nonconventional machining process, such as continuous wire electrical discharge machining, and forming a replacement member utilizing a similar cutting process. A cutting path utilized to remove the portion to be replaced and to form the replacement member includes interlocking projections and sockets and may include one or more tapers along the cutting path so that the portion may be removed only by lifting in one direction. For the cutting, an electrical discharge cutting wire moves along the outside of a CNC programmed cutting path.

All the known methods for repairing gas turbine components are costly, have a low flexibility and productivity, and are difficult to put into practice. Furthermore, bad tolerances lead to a bad quality, the dependence on a 3D model makes the repair expensive and elaborate, and these methods are limited to the repair of components with damages of low degradation and distortion.

The US 2003/0105538 A1 discloses a method for the rapid manufacturing of complete aerospace replacement parts, including removing an in-service aerospace part from an aerospace system. The in-service aerospace part is placed into a three-dimensional scanning device. The method then scans the in-service aerospace part utilizing the three-dimensional scanning device to develop a three-dimensional scan. A computer-aided-design model is then developed based on the three-dimensional scan. The method then direct metal fabricates a replacement aerospace part from the computer-aided-design model utilizing a layer-build technology device. Finally the replacement aerospace part is installed back into the aerospace system.

### SUMMARY OF THE INVENTION

It is therefore an object of the present invention to disclose an improved method for repairing a partly damaged gas turbine component, which does not require a parametric CAD model of the cut-out piece of the component, which can be applied with reduced cost, resulting in improved flexibility and productivity, and has the advantage of high quality.

This object is obtained by a method with the limitations of claim 1. The inventive method is characterised in that the damaged section is removed in form of a cut-out section along a split line as one single cut-out piece, that the cut-out piece is measured to obtain the actual non-parametric geometry data set of the cut-out piece, and that said 3-D article is manufactured based on said geometry data set of the cut-out piece.

According to the invention an additional material surcharge is added around at least part of the split line to the geometry data set of the cut-out piece to allow for a compensation of the material loss due to cutting and/or the preparation of a split line surface and/or a final or individual adaptation of a standard 3-D article geometry to the individual ex-service gas turbine component to be repaired.

Throughout the following description, a "geometry data set" is meant to be a set of measured points representing a physical part; a "CAD model" is meant to be a, by means of a computer software created, virtual representation of a physical part, whereby in a "parametric" CAD model the geometry of the virtual representation is described by mathematical functions (e.g. NURBS), and in a "non-parametric" CAD model the geometry of the virtual representation is described by primitives such as points, triangles, rectangles, etc..

According to one embodiment of the inventive method a virtual 3-D article in form of a CAD model is created from said measured geometry data.

According to another embodiment of the invention damaged or missing areas of the cut-out piece are virtually rebuild to create and/or modify and/or extend said CAD model.

According to another embodiment of the invention the CAD model includes information about the inner surface, potential distortions, local wall thickness modifications and positions of cooling air holes of the ex-service gas turbine component.

According to another embodiment of the invention the 3-D article is manufactured by an additive manufacturing technology such as selective laser melting (SLM), selective laser sintering (SLS) or electron beam melting (EBM).

A method for making metallic or non-metallic products by a free-form laser sintering from a powder material is for example known from document DE 102 19 983 B4. Another method for manufacturing a moulded body, particularly a prototype of a product or component part, a tool prototype or spare part, in accordance with three-dimensional CAD data of a model of a moulded body, by depositing layers of a metallic material in powder form, is disclosed in document EP 946 325 B1. Furthermore, document US 6,811,744 B2 teaches device and arrangement for producing a three-dimensional object by means of a ray gun for controlled fusion of a thin layer of powder on the work table.

According to another embodiment of the invention the 3-D article is manufactured by investment casting or milling.

According to a further embodiment of the invention before joining the manufactured 3-D article into the ex-service gas turbine component, the manufactured 3-D article is recontoured into a recontoured 3-D article to reach optimum conditions of the split line surface and/or gap width for the final joining process.

Especially, the recontouring is done by removal of a fixed thickness of material.

As an alternative the recontouring may be done by individual adaptive machining.

According to another embodiment of the invention the adaptive machining is based on the individually scanned ex-service gas turbine component, which is compared with the 3-D article geometry.

Alternatively, the adaptive machining may use a geometry data set based on the evaluation of a limited number of scanned gas turbine components of the same kind.

According to another embodiment of the invention the recontouring process is done by a subtractive machining process, such as milling, grinding or electro chemical machining (ECM).

According to just another embodiment of the invention, further to the recontouring, other pre-joining processes are applied to the 3-D article to make the 3-D article ready for insertion.

Preferably, the pre-joining processes include a heat treatment and/or chemical cleaning of the surfaces.

According to another embodiment of the invention the joining of said gas turbine component and said 3-D article is done by brazing or welding or a combination thereof.

### BRIEF DESCRIPTION OF THE DRAWINGS

The present invention is now to be explained more closely by means of different embodiments and with reference to the attached drawings.
- Fig. 1: shows, in a side view, a damaged gas turbine component in form of a blade, which may be a starting point of the method according to the invention;
- Fig. 2: shows the blade of Fig.1 and the split line around the damaged region, where a single piece of a blade will be cut-out;
- Fig. 3: shows an arrangement for measuring the geometry of the cut-out piece of Fig. 2;
- Fig. 4: is a representation of the CAD model of the 3-D article to be manufactured for replacing the cut-out piece;
- Fig. 5: shows the principles of the recontouring process of the manufactured 3-D article, whereby additional information from the gas turbine component itself may be used;

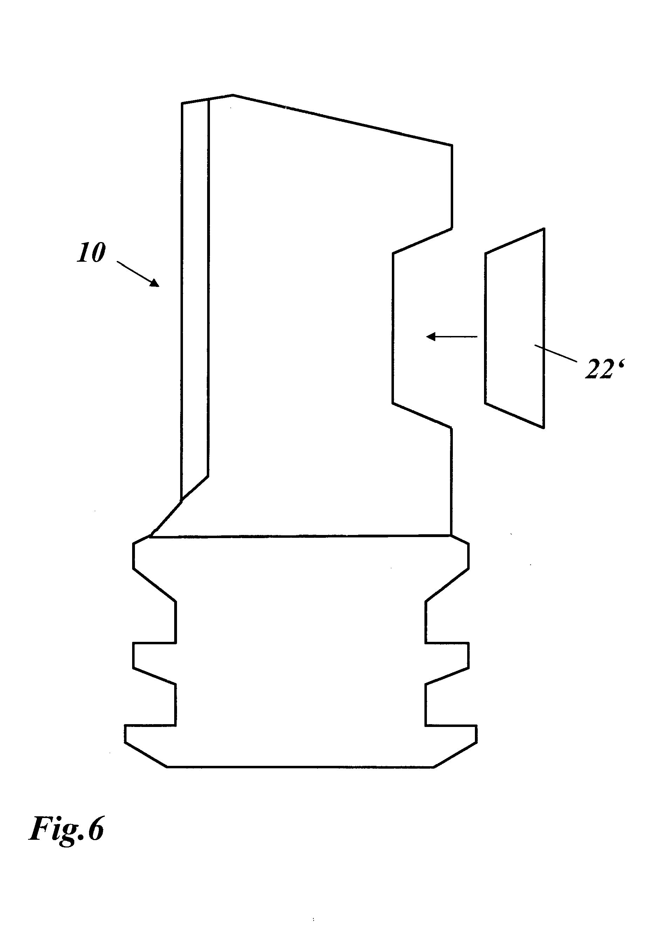

- Fig. 6: shows how the manufactured and recontoured 3-D article is inserted into the gas turbine component to be repaired;
- Fig. 7: shows the post machining process after the 3-D article into component have been joined; and
- Fig.8: shows in a process scheme various alternative routes of processing within the method of the invention.

### DETAILED DESCRIPTION OF DIFFERENT EMBODIMENTS OF THE INVENTION

In general, the present invention comprises a method for repairing an ex-service gas turbine component by removing a damaged location, which method allows aright gap control, followed by replacing the respective location by a precisely fitting 3-D article. This 3-D article can be manufactured by additive manufacturing processes, such as selective laser melting (SLM), selective laser sintering (SLS), electron beam melting (EBM) or by standard methods, such as investment casting or machining process such as milling.

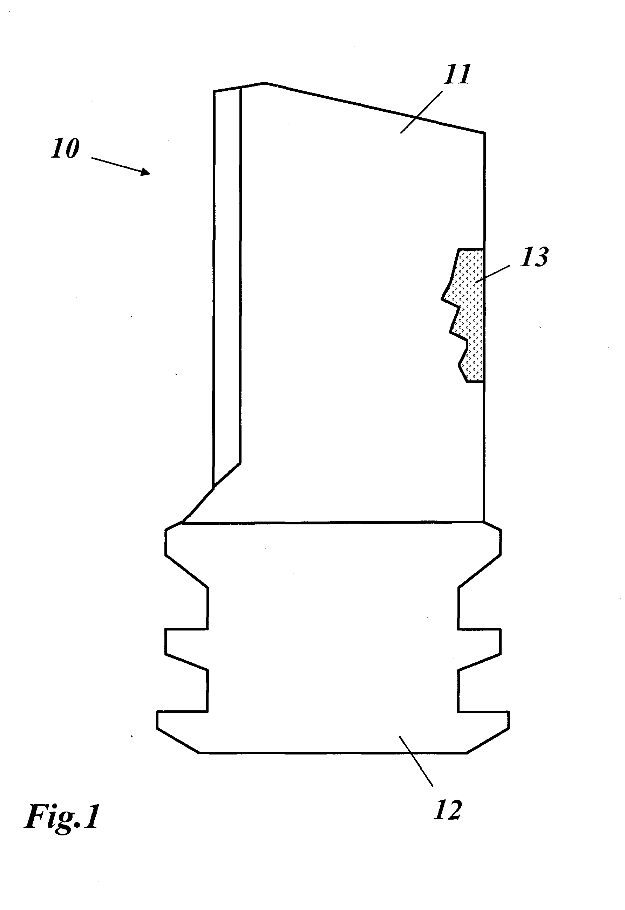

The method starts with the damaged gas turbine component an example of which is shown in Fig. 1. The gas turbine component 10 in this figure has the form of a turbine blade with an airfoil 11 and a root 12. This gas turbine component 10 is damaged as it shows a damaged area 13 at one of the edges of the airfoil 11.

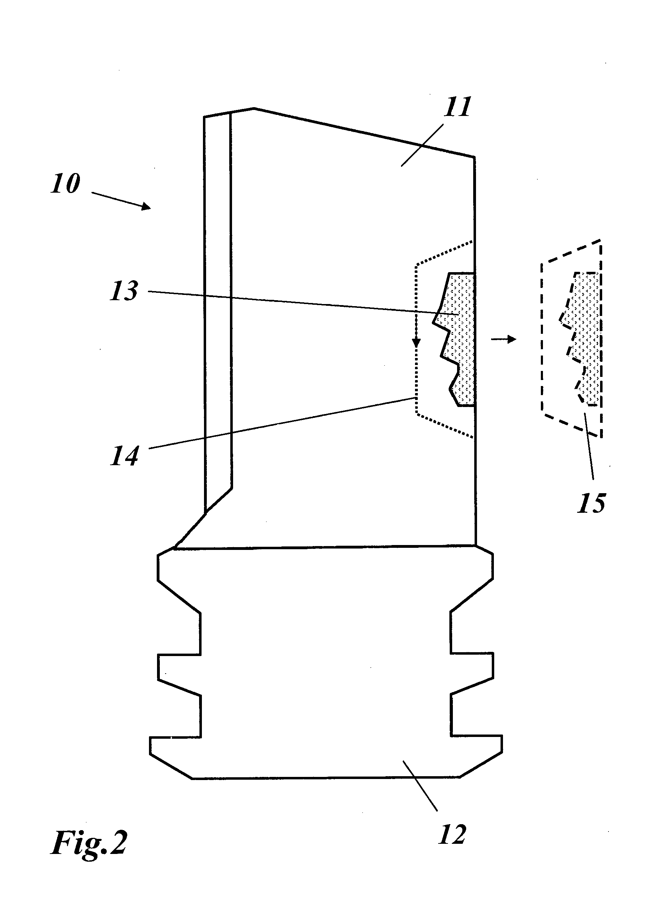

As shown in Fig. 2 the heavily damaged section or area 13 on the ex-service gas turbine component 10 is removed using a machining process, where the cut-out section will be available as one, single cut-out piece 15. Therefore, machining processes, such as electrical discharge machining (EDM), water jet, laser or plasma cutting are preferentially applied. With such machining processes the loss of material in the split line 14 between the cut-out piece 15 and the gas turbine component 10 can be reduced to a minimum. A milling or grinding process cannot be used, as no cut-out piece would be available. The machining process has preferably a marginal influence on the cutting area (no oxidation, small heat affected zone and low roughness).

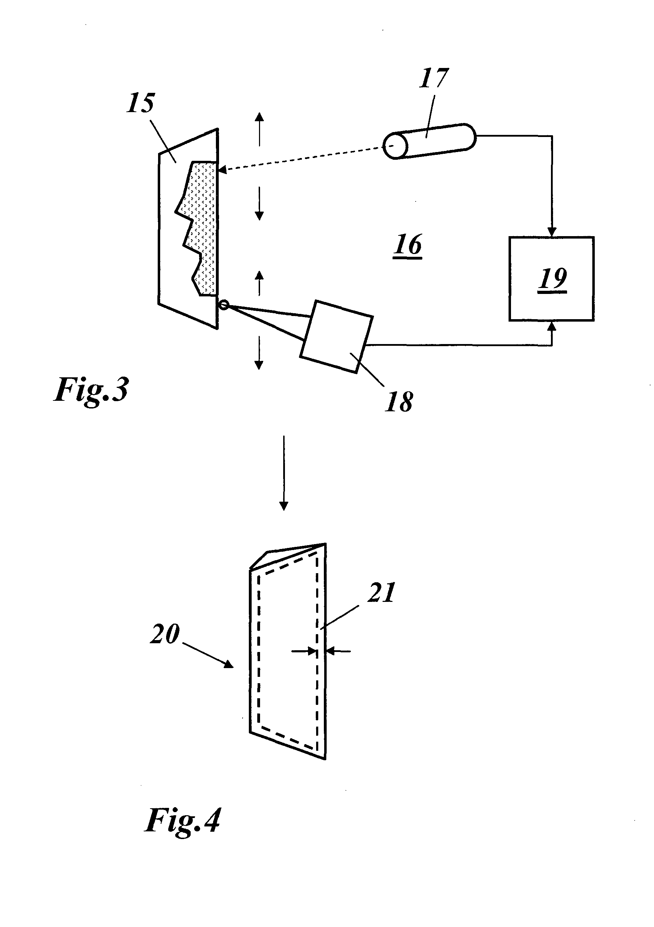

After the machining process the cut-out piece 15 including the damaged section (outer and inner contour) is measured using tactile or optical methods in order to obtain the actual, non-parametric geometry data set of this piece. Fig. 3 shows the respective optical or tactile measuring system 16, wherein an optical scanning head 17 and/or tactile scanning head 18, which are controlled in their movement by a control 19, are used to pickup the non-parametric geometry data set of the cut-out piece 15.

Next, the damaged/missing areas are virtually re-build and potentially modified (e.g. by Reverse Engineering) allowing to create and/or modify and/or extend a final CAD model of the cut-out piece 15, also called 3D article 20 (Fig. 4). The resulting CAD model of this 3D article 20 includes the information about the inner surface, potential distortions, local wall thickness modifications and position of cooling air holes of the ex-service component. An additional material surcharge 21 is added around at least part of the split line to the geometry data set of the cut-out piece 15. This allows a compensation of the material loss due to cutting, preparation of split line surface and, if needed, also a final or individual adaptation of a standard 3D article geometry to the individual ex-service gas turbine component 10 to be repaired.

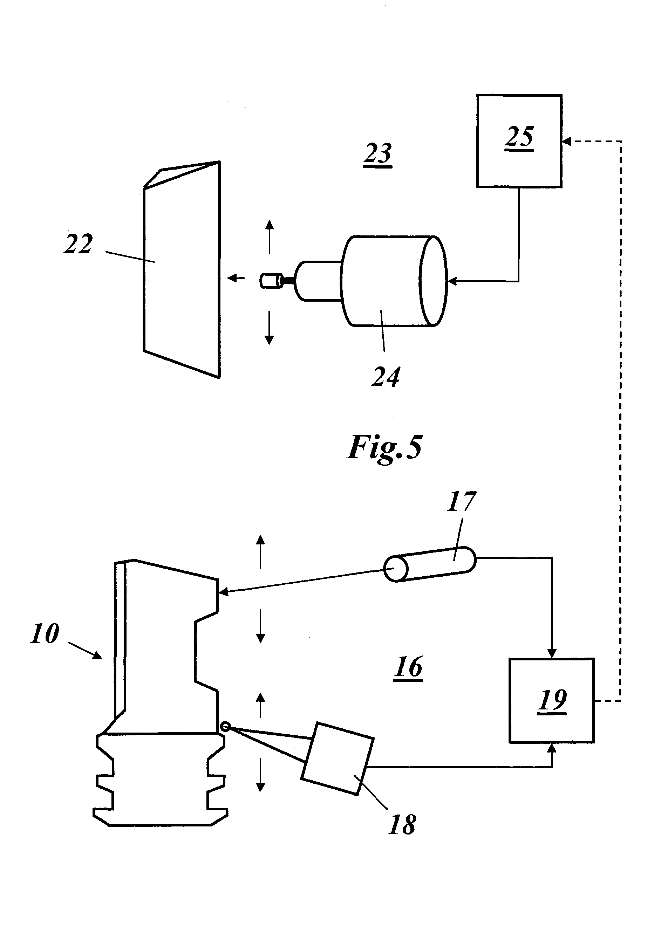

Based on the CAD model of the 3-D article 20 the reconditioning procedure continuous with the manufacturing of a real 3-D article (22 in Fig. 5) For the related subsequent reconditioning chain three different approaches are generally possible:
- The first variant generally allows the manufacturing of the 3-D article 22 in form of a component of standard size without any additional information or measurement of the individual ex-service gas turbine component 10 to be repaired. There is a standard material surcharge on the standard cut-out piece for compensation of the cutting process and for surface preparation for joining. Accordingly, no 3-D model or measurement of the gas turbine component 10 is used. The fixed thickness of material is removed during recontouring (see upper half of Fig. 5, where a machining system 23 with a machining tool 24 into respective control 25 are used for recontouring).
- The second option would include a post machining (adaptive machining) of a standardized replacement article or "coupon" based on the individually scanned ex-service gas turbine component with aperture (see lower half of Fig. 5), which is compared with the 3-D article geometry. In this case the gas turbine component or blade 10 to be repaired has to be individually scanned, or alternatively, a geometry data set based on the evaluation of a limited number of scanned blades is used.
- The third alternative would ask for an individual scanning of each gas turbine component or blade 10 to be repaired after removal of the damaged area in order to generate individual machine data sets for the additive manufacturing of respective 3-D articles.

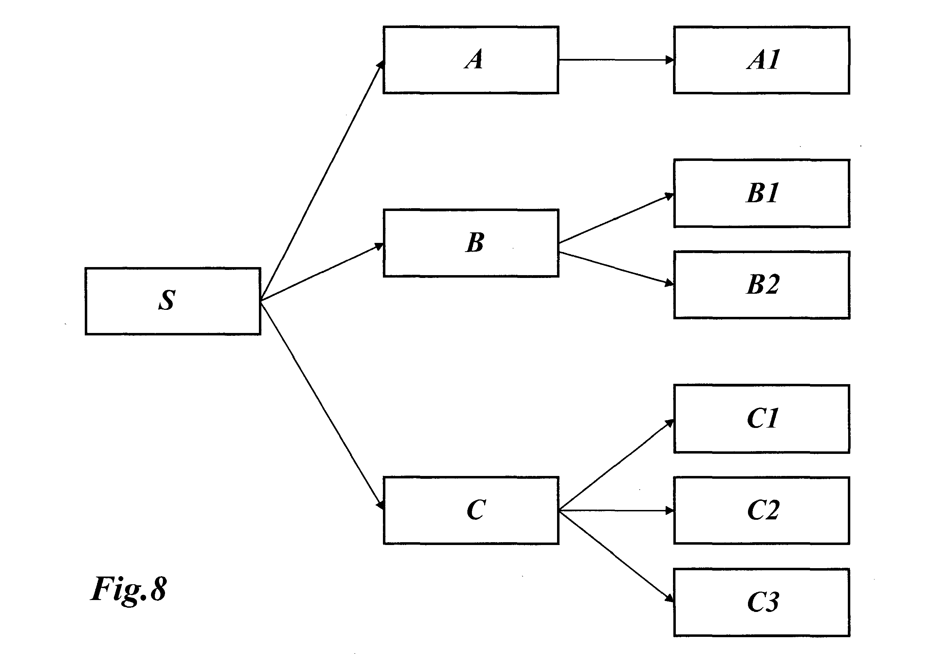

The selection of the best suited variant strongly depends on the degree of deformation to be expected on the individual parts of a set of blades to be repaired. Fig. 8 shows in a process scheme various alternative routes of processing within the method of the invention. The scheme begins with the start S that is the measurement of the cut-out piece 15.

Variant A is favoured, when the gas turbine component 10 to be repaired has only low distortion and damages. In this case, a standard material surcharge on the standard cut-out piece is provided for compensation of cutting process and for surface preparation for joining. No 3-D model or measurement of the gas turbine component are necessary; a layer of fixed thickness is removed (A1).

Variant B is favoured, when the gas turbine component 10 to be repaired has medium distortion and damages. In this case, a standard material surcharge on the cut-out piece is provided plus additional oversize for adaptive machining and for surface preparation for joining. When the joining process requires only a medium/low gap precision, a statistical evaluation of damages of components is used for the generation of a model and material removal with fixed thickness (B1). When the joining process requires a high gap precision, each component is measured and adaptive machining is applied (B2).

Variant C is favoured, when the gas turbine component 10 has a high distortion and worn out locations. In this case, there is an individual manufacturing of the inserts with a material surcharge on the cut-out piece for compensation of the cutting process and for the surface preparation for joining. When the joining process requires only a low gap precision, either no 3-D model or measurement of the gas turbine component are necessary and a layer of fixed thickness is removed (C1), or a statistical evaluation of damages of components is used for the generation of a model and material removal with fixed thickness (C2). When the joining process requires a high gap precision, each component is measured and adaptive machining is applied (C3).

Based on the generated geometry data set of the cut-out piece, the 3D article 22 can be manufactured by an additive manufacturing technology, such as selective laser melting (SLM), selective laser sintering (SLS) or electron beam melting

(EBM). Also conventional methods, such as investment casting or milling can be used. The decision of the manufacturing technology also depends on the degree of deformation to be expected on the individual parts of a set of blades to be repaired.

Before joining the manufactured 3-D article 22 into the ex-service gas turbine component 10, each 3-D article 22 needs to be recontoured to reach optimum conditions of the split line surface (e.g. roughness, gap geometry/tolerance) for the final joining process. Depending on the selected approach, the recontouring step can be done by removal of a fixed value (thickness) or by individual adaptive machining. For the recontouring a standard process is used, such as milling, grinding or electro chemical machining (ECM); Fig. 5 shows an exemplary machining system 23 for recontouring the manufactured 3-D article 22 into a recontoured 3-D article 22', with a rotating machining tool 24 and a respective control 25. Besides the recontouring, other pre-joining processes (and chemical cleaning of the surfaces to be joined) may be needed depending on the manufacturing process, e.g. pre-heat treatments for improved weldability, stress relief heat treatments for 3D articles made by additive manufacturing technologies, etc..

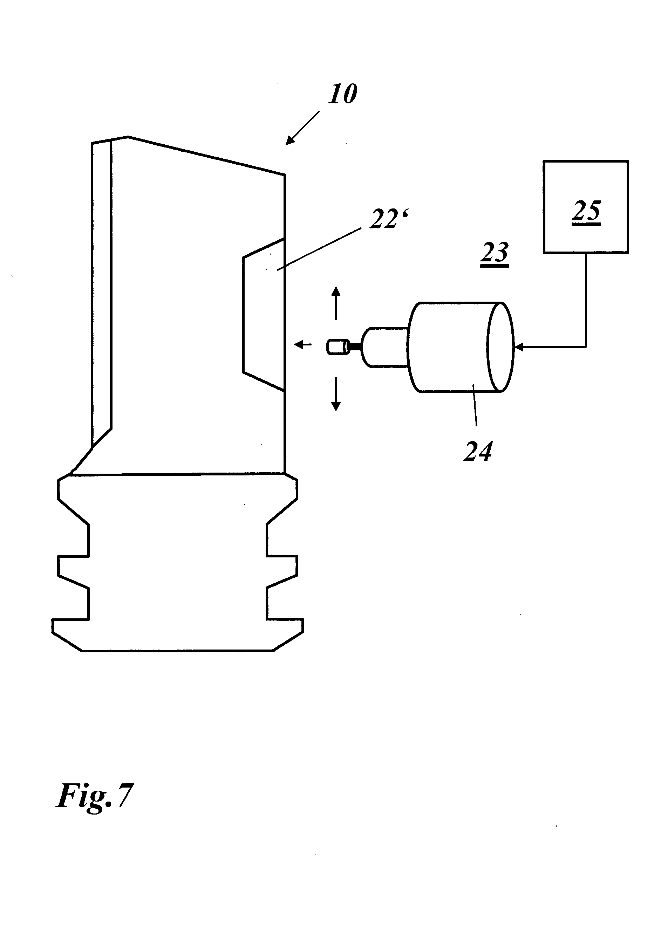

The joining of the manufactured 3D article into the ex-service gas turbine component 10 can be realized with a standard and specifically adapted joining process, such as brazing or welding or a combination thereof. A final heat treatment and post machining (see Fig. 7) is carried out at the end of the reconditioning chain.

The advantages of the invention over the known technologies are:
- No measurement of the whole component to get the information about the ex-service influence such as distortion, depending on approach.
- No CAD model of the whole component is required.
- No parametric CAD model of the 3D article (cut-out piece) is required.
- Characteristic issues/information of the cut-out piece due to service and new manufacturing are covered with the scan of the cut-out piece.
- Cost and scrap rate reduction.
- Flexibility and productivity are improved.
- Extended repair to highly loaded areas.

### LIST OF REFERENCE NUMERALS

- 10: gas turbine component (e.g. turbine blade)
- 11: airfoil
- 12: root
- 13: damaged section
- 14: split line
- 15: cut-out piece
- 16: measuring system (optical or tactile)
- 17: optical scanning head
- 18: tactile scanning head
- 19: control
- 20: 3-D article (data set)
- 21: material surcharge
- 22: 3-D article (manufactured)
- 22': 3-D article (recontoured)
- 23: machining system
- 24: machining tool
- 25: control
- S: start
- A,B,C: repair process requirement
- A1,B1,B2: repair process requirement
- C1,C2,C3: repair process requirement

## Claims

1. A method for repairing an ex-service gas turbine component (10) comprising the steps of: removing a damaged section (13) from said gas turbine component (10), manufacturing a 3-D article (22), which fits in said gas turbine component (10) to replace the removed damaged section (13), and joining said gas turbine component (10) and said 3-D article (22) inserted therein, **characterised in that** the damaged section (13) is removed in form of a cut-out section along a split line (14) as one single cut-out piece (15), that the cut-out piece (15) is measured to obtain the actual non-parametric geometry data set of the cut-out piece (15), that an additional material surcharge (21) is added around at least part of the split line (14) to the geometry data set of the cut-out piece (15) to allow for a compensation of the material loss due to cutting and/or the preparation of a split line surface and/or a final or individual adaptation of a standard 3-D article geometry to the individual ex-service gas turbine component (10) to be repaired, and that said 3-D article (22) is manufactured based on said geometry data set of the cut-out piece (15).

2. A method according to claim 1, **characterised in that** a virtual 3-D article (20) in form of a CAD model is created from said measured geometry data.

3. A method according to claim 2, **characterised in that** damaged or missing areas of the cut-out piece (15) are virtually rebuild to create and/or modify and/or extend said CAD model.

4. A method according to claim 2 or 3, **characterised in that** the CAD model includes information about the inner surface, potential distortions, local wall thickness modifications and positions of cooling air holes of the ex-service gas turbine component (10).

5. A method according to one of the claims 1 to 4, **characterised in that** the 3-D article (22) is manufactured by an additive manufacturing technology such as selective laser melting (SLM), selective laser sintering (SLS) or electron beam melting (EBM).

6. A method according to one of the claims 1 to 4, **characterised in that** the 3-D article (22) is manufactured by investment casting or milling.

7. A method according to one of the claims 1 to 6, **characterised in that** before joining the manufactured 3-D article (22) into the ex-service gas turbine component (10), the manufactured 3-D article (22) is recontoured into a recontoured 3-D article (22') to reach optimum conditions of the split line surface and/or gap width for the final joining process.

8. A method according to claim 7, **characterised in that** the recontouring is done by removal of a fixed thickness of material.

9. A method according to claim 7, **characterised in that** the recontouring is done by individual adaptive machining.

10. A method according to claim 9, **characterised in that** the adaptive machining is based on the individually scanned ex-service gas turbine component (10), which is compared with the 3-D article geometry.

11. A method according to claim 9, **characterised in that** the adaptive machining uses a geometry data set based on the evaluation of a limited number of scanned gas turbine components of the same kind.

12. A method according to one of the claims 7 to 11, **characterised in that** the recontouring process is done by a subtractive machining process, such as milling, grinding or electro chemical machining (ECM).

13. A method according to one of the claims 7 to 12, **characterised in that**, further to the recontouring, other pre-joining processes are applied to the 3-D article (22, 22') to make the 3-D article (22, 22') ready for insertion.

14. A method according to claim 13, **characterised in that** the pre-joining processes include a heat treatment and/or chemical cleaning of the surfaces.

15. A method according to one of the claims 1 to 14, **characterised in that** the joining of said gas turbine component (10) and said 3-D article (22) is done by brazing or welding or a combination thereof.

## Patentansprüche

1. Verfahren zum Reparieren einer außer Betrieb genommenen Turbinenkomponente (10), umfassend folgende Schritte: Entfernen eines beschädigten Abschnitts (13) aus der Gasturbinenkomponente (10), Herstellen eines 3D-Artikels (22), der in die Gasturbinenkomponente (10) passt, um den entfernten beschädigten Abschnitt (13) zu ersetzen, und Zusammenfügen der Gasturbinenkomponente (10) und des in diese eingesetzten 3D-Artikels (22),
**dadurch gekennzeichnet, dass** der beschädigte Abschnitt (13) in Form eines ausgeschnittenen Abschnitts entlang einer Trennlinie (14) als ein einziges ausgeschnittenes Stück (15) entfernt wird, dass das ausgeschnittene Stück (15) gemessen wird, um den tatsächlichen nichtparametrischen Geometriedatensatz des ausgeschnittenen Stücks (15) zu ermitteln, dass mindestens um einen Teil der Trennlinie (14) herum dem Geometriedatensatz des ausgeschnittenen Stücks (15) ein zusätzlicher Materialzuschlag (21) hinzugefügt wird, um eine Kompensation der Materialeinbuße aufgrund des Schneidens und/oder der Herstellung einer Trennlinienoberfläche und/oder einer endgültigen oder individuellen Anpassung einer Standardgeometrie des 3D-Artikels an die zu reparierende, individuelle, außer Betrieb genommene Gasturbinenkomponente (10) zu ermöglichen, und dass der 3D-Artikel (22) auf der Basis des Geometriedatensatzes des ausgeschnittenen Stücks (15) hergestellt wird.

2. Verfahren nach Anspruch 1, **dadurch gekennzeichnet, dass** ein virtueller 3D-Artikel (20) in Form eines CAD-Modells aus den gemessenen Geometriedaten erstellt wird.

3. Verfahren nach Anspruch 2, **dadurch gekennzeichnet, dass** beschädigte oder fehlende Bereiche des ausgeschnittenen Stücks (15) virtuell rekonstruiert werden, um das CAD-Modell zu erstellen und/oder zu modifizieren und/oder zu erweitern.

4. Verfahren nach Anspruch 2 oder 3, **dadurch gekennzeichnet, dass** das CAD-Modell Informationen über die innere Oberfläche, mögliche Verformungen, lokale Wanddickenmodifikationen und Positionen von Kühlluftlöchern der außer Betrieb genommenen Gasturbinenkomponente (10) umfasst.

5. Verfahren nach einem der Ansprüche 1 bis 4, **dadurch gekennzeichnet, dass** der 3D-Artikel (22) durch additive Fertigungstechnologien, beispielsweise durch selektives Laserschmelzen (SLM), selektives Lasersintern (SLS) oder Elektronenstrahlschmelzen (EBM), hergestellt wird.

6. Verfahren nach einem der Ansprüche 1 bis 4, **dadurch gekennzeichnet, dass** der 3D-Artikel (22) durch Feingießen oder Fräsen hergestellt wird.

7. Verfahren nach einem der Ansprüche 1 bis 6, **dadurch gekennzeichnet, dass** vor dem Einfügen des hergestellten 3D-Artikels (22) in die außer Betrieb genommene Gasturbinenkomponente (10) der hergestellte 3D-Artikel (22) zu einem neu konturierten 3D-Artikel (22') umkonturiert wird, um optimale Bedingungen der Trennlinienoberfläche und/oder der Spaltbreite für den endgültigen Fügevorgang zu erzielen.

8. Verfahren nach Anspruch 7, **dadurch gekennzeichnet, dass** das Umkonturieren durch das Abtragen einer vorgegebenen Materialdicke erfolgt.

9. Verfahren nach Anspruch 7, **dadurch gekennzeichnet, dass** das Umkonturieren durch individuelles adaptives Bearbeiten erfolgt.

10. Verfahren nach Anspruch 9, **dadurch gekennzeichnet, dass** das adaptive Bearbeiten auf der individuell gescannten außer Betrieb genommenen Gasturbinenkomponente (10) basiert, welche mit der Geometrie des 3D-Artikels verglichen wird.

11. Verfahren nach Anspruch 9, **dadurch gekennzeichnet, dass** das adaptive Bearbeiten einen Geometriedatensatz verwendet, der auf der Auswertung einer begrenzten Anzahl von gescannten Gasturbinenkomponenten derselben Art beruht.

12. Verfahren nach einem der Ansprüche 7 bis 11, **dadurch gekennzeichnet, dass** der Umkonturierungsvorgang durch einen subtraktiven Bearbeitungsvorgang, beispielsweise durch Fräsen, Schleifen oder elektrochemisches Bearbeiten (ECM), erfolgt.

13. Verfahren nach einem der Ansprüche 7 bis 12, **dadurch gekennzeichnet, dass** neben dem Umkonturieren weitere dem Fügen vorausgehende Vorgänge auf den 3D-Artikel (22, 22') angewandt werden, um den 3D-Artikel (22, 22') einfügebereit zu machen.

14. Verfahren nach Anspruch 13, **dadurch gekennzeichnet, dass** die dem Fügen vorausgehenden Vorgänge eine Wärmebehandlung und/oder chemisches Reinigen der Oberflächen umfassen.

15. Verfahren nach einem der Ansprüche 1 bis 14, **dadurch gekennzeichnet, dass** das Zusammenfügen der Gasturbinenkomponente (10) und des 3D-Artikels (22) durch Hartlöten oder Schweißen oder eine Kombination daraus erfolgt.

## Revendications

1. Procédé de réparation d'un composant (10) hors service d'une turbine à gaz, le procédé comprenant les étapes qui consistent à :
enlever la partie endommagée (13) dudit composant (10) de la turbine à gaz,
fabriquer un article tridimensionnel (22) qui s'ajuste dans ledit composant (10) de la turbine à gaz pour remplacer la partie endommagée (13) qui a été enlevée et
relier ledit composant (10) de la turbine à gaz audit article tridimensionnel (22) qui y a été inséré, **caractérisé en ce que**
la partie endommagée (13) est enlevée sous la forme d'un segment découpé en unique pièce découpée (15) le long d'une ligne de séparation (14),
**en ce que** la pièce découpée (15) est mesurée en vue d'obtenir l'ensemble effectif de données géométriques non paramétriques de la pièce découpée (15),
**en ce qu'**un supplément (21) de matière est ajouté à l'ensemble effectif de données géométriques de la pièce découpée (15) autour d'au moins une partie de la ligne de séparation (14) pour permettre de compenser la perte de matière due à la découpe, à la préparation de la surface de la ligne de séparation et/ou à l'adaptation finale ou particulière d'un article tridimensionnel à géométrie standard au composant (10) particulier de turbine à gaz qui doit être réparé et
**en ce que** ledit article tridimensionnel (22) est fabriqué sur la base dudit ensemble de données géométriques de la pièce découpée (15).

2. Procédé selon la revendication 1, **caractérisé en ce qu'**un article tridimensionnel (20) virtuel est créé sous la forme d'un modèle CAO à partir desdites données géométriques mesurées.

3. Procédé selon la revendication 2, **caractérisé en ce que** les parties endommagées ou manquantes de la pièce découpée (15) sont recréées virtuellement pour créer, modifier ou étendre ledit modèle CAO.

4. Procédé selon les revendications 2 ou 3, **caractérisé en ce que** le modèle CAO contient des informations sur la surface intérieure, les éventuelles déformation, les modifications locales de l'épaisseur des parois et la position des trous d'air de refroidissement du composant (10) hors service de turbine à gaz.

5. Procédé selon l'une des revendications 1 à 4, **caractérisé en ce que** l'article tridimensionnel (22) est fabriqué en recourant à une technologie de fabrication à addition de matière, par exemple la fusion sélective au laser (SLM), le frittage sélectif au laser (SLS) ou la fusion par faisceau d'électrons (EBM).

6. Procédé selon l'une des revendications 1 à 4, **caractérisé en ce que** l'article tridimensionnel (22) est fabriqué par coulée ou usinage.

7. Procédé selon l'une des revendications 1 à 6, **caractérisé en ce qu'**avant de relier l'article tridimensionnel (22) fabriqué au composant (10) hors service de turbine à gaz, l'article tridimensionnel (22) fabriqué est recontouré en un article tridimensionnel (22') recontouré de manière à obtenir des conditions de la surface de la ligne de séparation et/ou de la largeur de l'interstice optimales pour l'opération final de liaison.

8. Procédé selon la revendication 7, **caractérisé en ce que** le recontourage est réalisé par enlèvement dune épaisseur donnée de matière.

9. Procédé selon la revendication 7, **caractérisé en ce que** le recontourage est réalisé par usinage adaptatif individuel.

10. Procédé selon la revendication 9, **caractérisé en ce que** l'usinage adaptatif est basé sur le composant (10) hors service de turbine à gaz qui a été scanné et qui est comparé à la géométrie de l'article tridimensionnel.

11. Procédé selon la revendication 9, **caractérisé en ce que** l'usinage adaptatif utilise un ensemble de données géométriques basé sur l'examen d'un nombre limité de composants de turbine du même type qui ont été scannés.

12. Procédé selon l'une des revendications 7 à 11, **caractérisé en ce que** l'opération de recontourage est réalisée par un opération d'usinage à enlèvement de matière, par exemple par tournage, meulage ou usinage électrochimique (ECM).

13. Procédé selon l'une des revendications 7 à 12, **caractérisé en ce qu'**en plus du recontourage, d'autres opérations de pré-liaison sont appliquées à l'article tridimensionnel (22, 22') pour amener l'article tridimensionnel (22, 22') dans un état prêt à l'insertion.

14. Procédé selon la revendication 13, **caractérisé en ce que** les opérations de pré-liaison comprennent un traitement thermique et/ou un nettoyage chimique des surfaces.

15. Procédé selon l'une des revendications 1 à 14, **caractérisé en ce que** la liaison dudit composant (10) de turbine à gaz et dudit article tridimensionnel (22) est réalisé par brasage, soudage ou une de leurs combinaisons.
